# EUROPÄISCHE PATENTSCHRIFT

(11) **EP 0 455 859 B1**
(45) Veröffentlichungstag und Bekanntmachung des Hinweises auf die Patenterteilung: **14.07.1993**
(21) Anmeldenummer: 90108887.2
(22) Anmeldetag: 11.05.1990
(51) Int. Cl.: B60R 21/00, B60R 22/36

(54) **Ansteuermechanismus für Rückstrammeinrichtungen in Fahrzeugen**
Trigger mechanism for restraining devices in vehicles
Mécanisme de déclenchement pour dispositif de retenue dans des véhicules

(43) Veröffentlichungstag der Anmeldung: 13.11.1991
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- EP-A- 0 084 791
- EP-A- 0 283 188
- EP-A- 0 305 765
- EP-A- 0 341 046
- FR-A- 2 374 188
- US-A- 4 181 326

## Beschreibung

Die Erfindung betrifft einen Ansteuermechanismus für Rückstrammeinrichtungen eines Sicherheitsgurt-Rückhaltesystems oder für Gassack-Rückhaltesysteme in Fahrzeugen, mit in einem Gehäuse angeordneten Funktionsteilen, die eine Sperreinrichtung zur Sperrung der Ansteuerfunktion umfassen, wobei diese Sperreinrichtung zwischen einem Sperrzustand und einem Freigabezustand umsteuerbar ist und zur Umsteuerung der Sperreinrichtung zwischen ihren zwei Zuständen ein Sperrelement bewegt wird.

Bei mechanischen oder pyrotechnischen Rückstrammeinrichtungen, die in einen Fahrzeugsitz integriert sind, kann der komplette Fahrzeugsitz mit Rückstrammeinrichtung als fertiger Modul aufgebaut sein, der als solcher in das Fahrzeug eingebaut wird. Der mechanische Ansteuermechanismus eines solchen Rückstrammsystems ist mit einer fahrzeugsensitiven Masse ausgestattet, die auf Verzögerungen anspricht. Die Auslöseschwelle ist je nach Fahrzeugtyp verschieden. Bei der Handhabung und Montage des fertigen Fahrzeugsitzes oder auch einer separaten Rückstrammeinrichtung können Stöße auftreten, die im Extremfall die Auslöseschwelle überschreiten und daher zu einer Aktivierung des Rückstrammantriebes führen. Die Rückstrammeinrichtung ist dann nicht mehr funktionsfähig.

Um eine ungewollte Aktivierung der Rückstrammeinrichtung zu vermeiden, wird eine Steuereinrichtung verwendet, die so lange im Sperrzustand verbleibt und eine Aktivierung der Rückstrammeinrichtung verhindert, bis der Fahrzeugsitz im Fahrzeug montiert ist.

Der Erfindung liegt die Aufgabe zugrunde, einen Ansteuermechanismus der eingangs angegebenen Art dahingehend weiterzubilden, daß die Steuereinrichtung einer nahezu beliebigen Montagestelle zugeordnet werden kann und sich dennoch durch Einfachheit und kostengünstige Herstellbarkeit auszeichnet.

Diese Aufgabe wird bei einem Ansteuermechanismus der eingangs angegebenen Art erfindungsgemäß dadurch gelöst, daß das Sperrelement an ein verdrehbar gelagertes Teil angeschlossen ist, das durch eine Montageschraube bei deren Festziehen mitdrehbar ist und dessen so erzeugte Drehbewegung eine Verschiebung des Sperrelements im Sinne einer Umsteuerung der Steuereinrichtung in den Freigabezustand bewirkt. Nahezu jeder Montagevorgang - sei es bei der Montage des kompletten Sitzes oder der Montage einzelner Komponenten der Rückstrammeinrichtung - erfordert die Verwendung von Montageschrauben. Bei dem erfindungsgemäßen Ansteuermechanismus kann die Sperreinrichtung einer beliebigen Montageschraube zugeordnet werden. Vor der Montage ist der Ansteuermechanismus gesichert, insbesondere dadurch, daß das Sperrelement durch Federkraft in seine Sperrstellung vorgespannt ist. Bei der Montage des kompletten Fahrzeugsitzes mit Rückstrammeinrichtung oder der separaten Rückstrammeinrichtung wird das verdrehbar gelagerte Teil einer geeigneten Montageschraube zugeordnet. Beim Festziehen dieser Montageschraube wird das verdrehbare Teil erfaßt und durch Reibungsschluß oder Formschluß mitgedreht. Die Drehbewegung dieses Teils wird vorzugsweise über einen am Umfang des Teils angreifenden Seilzug in eine Translationsbewegung umgesetzt, die auf das Sperrelement der Steuereinrichtung übertragen wird. Dieses Sperrelement ist insbesondere als axial beweglicher Stift ausgebildet, dessen vom Seilzug abgewandtes Ende in das Innere des Gehäuses des Ansteuermechanismus hineinragt und an einer fahrzeugsensitiven Trägheitsmasse angreift, um diese in ihrer Bereitschaftsstellung zu sichern.

Vorteilhafte Weiterbildungen der Erfindung sind in den Unteransprüchen angegeben.

Weitere Merkmale und Vorteile der Erfindung ergeben sich aus der Beschreibung einer bevorzugten Ausführungsform der Erfindung und aus der Zeichnung, auf die Bezug genommen wird. In der Zeichnung zeigen:
- Fig. 1: eine schematische Gesamtansicht eines Fahrzeugsitzes mit integrierter Rückstrammeinrichtung;
- Fig. 2: eine teilweise im Schnitt gezeigte schematische Ansicht eines Ansteuermechanismus mit Steuereinrichtung;
- Fig. 3: eine Explosivdarstellung der Steuereinrichtung;
- Fig. 4: eine Schnittansicht der Steuereinrichtung;
- Fig. 5: eine Teilansicht einer Ausführungsvariante der in Fig. 4 gezeigten Steuereinrichtung;
- Fig. 6: eine weitere Ausführungsvariante;
- Fig. 7: eine Ausführungsform mit Sicherung bei Betätigung einer Handhabe zur Sitzentriegelung;
- Fig. 8: eine Perspektivansicht eines Fahrzeugsitzes mit integrierter Rückstrammeinrichtung; und
- Fig. 9: eine Ausführungsvariante eines mechanischen Sensors.

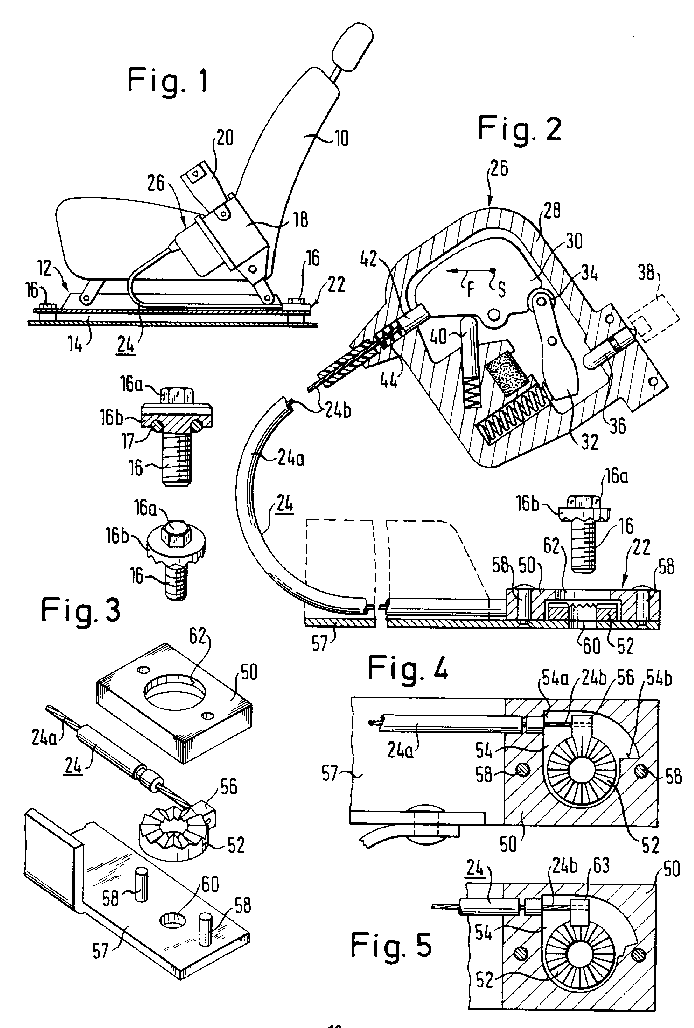

Der in Fig. 1 gezeigte Fahrzeugsitz 10 ist mittels seines Sitzrahmens 12 auf Schienen 14 gelagert, die mittels Montageschrauben 16 am Fahrzeugboden verankert sind. An der einen Seite des Fahrzeugsitzes 10 ist eine pyrotechnische Rückstrammeinrichtung 18 angeordnet, die im Aktivierungsfall ein Gurtschloß 20 schräg in Richtung des Fahrzeugbodens verlagert, um die Gurtlose aus dem Gurtsystem herauszuziehen. Einer der in Fig. 1 gezeigten Montageschrauben ist eine Steuereinrichtung 22 zugeordnet, die über einen Seilzug 24 mit einem mechanischen fahrzeugsensitiven Sensor 26 verbunden ist.

Dieser mechanische Sensor ist in Fig. 2 in vergrößertem Maßstab und in Schnittdarstellung gezeigt. In einem Gehäuse 28 ist eine fahrzeugsensitive Trägheitsmasse 30 verschwenkbar gelagert. Ein federbeaufschlagtes Schlagstück 32 in Form eines schwenkbar gelagerten zweiarmigen Hebels stützt sich mit einer Rolle 34 in einer konkaven Ausnehmung der Trägheitsmasse 30 ab. In dem in Fig. 2 gezeigten Bereitschaftszustand liegt der eine Arm des Schlagstücks 32 einem in einer Bohrung des Gehäuses 28 verschiebbar gelagerten Schlagbolzen 36 im Abstand gegenüber. Der Schlagbolzen 36 liegt seinerseits mit seinem äußeren Ende dem Schlagzünder einer pyrotechnischen Ladung 38 gegenüber, die in Fig. 2 nur schematisch angedeutet ist und Bestandteil eines pyrotechnischen Rückstrammantriebs ist (nicht dargestellt). Ein federbeaufschlagter Druckstift 40 stützt sich auf einer Fläche der Trägheitsmasse 30 ab und bestimmt gemeinsam mit der durch die konkave Ausnehmung an der Trägheitsmasse 30 gebildeten Steuerkurve die Auslöseschwelle, bei welcher die Trägheitsmasse 30 unter der Einwirkung von an ihrem Schwerpunkt S angreifenden Verzögerungskräften in Richtung eines Pfeiles F entgegen dem Uhrzeigersinn verschwenkt wird, um das Schlagstück 32 freizugeben, damit dieses unter der Wirkung der Federbeaufschlagung zum Schlagbolzen 36 hin beschleunigt wird, bis es auf dem Schlagbolzen auftrifft und diesen in den Schlagzünder eintreibt.

In einer weiteren Bohrung des Gehäuses 28 ist ein Steuerelement in Form eines Stiftes 42 axial verschiebbar gelagert. Dieser Stift 42 ragt mit seinem einen Ende in das Innere des Gehäuses 28 hinein und greift an einer stufenförmigen Aussparung der Trägheitsmasse 30 an, um diese in ihrer in Fig. 2 gezeigten Bereitschaftsstellung zu sichern. In diese Sperrstellung wird der Stift 42 durch eine Druckfeder 44 vorbelastet, die sich zwischen dem äußeren Ende des Stiftes 42 und dem Boden der diesen axial verschiebbar aufnehmenden Gehäusebohrung abstützt. Diese Gehäusebohrung setzt sich über eine Verengung in einen koaxialen äußeren Bohrungsabschnitt fort, in den das eine Ende des Außenmantels 24a des Seilzuges 24 eingeschoben ist. Das Zugseil 24b des Seilzuges 24 ist am äußeren Ende des Stiftes 42 befestigt.

Die der Montageschraube 16 zugeordnete Steuereinrichtung ist mit dem mechanischen Sensor 26 über den Seilzug 24 verbunden. Sie besteht aus einem plattenförmigen Lagergehäuse 50 und einem drehbaren Teil 52 in Form einer Ringscheibe, die in einem auf einer Seite des Gehäuses 50 ausgesparten Lagerraum 54 mit Spiel aufgenommen ist. Das Teil 52 weist einen radialen Ansatz 56 auf, der mit einer tangentialen Bohrung versehen ist, in welcher das zugehörige Ende des Zugseils 24b verpreßt ist. Der Lagerraum 54 bildet zwei Anschläge 54a, 54b, zwischen denen der radiale Ansatz 56 des Teils 52 begrenzt verdrehbar ist. Wie aus Fig. 3 ersichtlich ist, wird das Gehäuse 50 an einer Grundplatte 56 mittels zweier Bolzen oder Niete 58 befestigt. Die Grundplatte 56 verschließt den Lagerraum 54, ist jedoch mit einer Durchgangsbohrung 60 für eine Montageschraube 16 versehen.

Der in Fig. 4 gezeigte Zustand ist ein Bereitschaftszustand, in welchem das Teil 52 eine Zwischenstellung zwischen den Anschlägen 54a, 54b einnimmt. In dieser Stellung wahrt also der radiale Ansatz 56 einen gewissen Winkelabstand zu dem Anschlag 54a. Je nach Verlegung des Seilzuges 24 kann nämlich eine mehr oder weniger ausgeprägte Verkürzung des Endabschnittes des Zugseils 24b zwischen dem Anschlag 54a und dem radialen Ansatz 56 eintreten. Aufgrund des im Bereitschaftszustand vorhandenen Abstandes zwischen dem Anschlag 54a und dem radialen Ansatz 56 kann auch bei einer ausgeprägten Verkürzung des dazwischengelegenen Endabschnittes des Zugseils 24b kein Zug auf den Stift 42 ausgeübt werden, so daß die Sicherung der Trägheitsmasse 30 unter allen Umständen gewährleistet ist. Andererseits liegt der Anschlag 54b in ausreichendem Abstand von dem Anschlag 54a, um eine Drehbewegung des Teils 52 zu ermöglichen, durch die der Stift 42 aus der Bewegungsbahn der Trägheitsmasse 30 herausgezogen wird, so daß eine Entsicherung durch Drehung des Teils 52 zum Anschlag 54b hin erfolgt. Diese Drehung des Teils 52 wird bei der Montage dadurch erzeugt, daß die Montageschraube 16 an einer ihrem Kopf 16a benachbarten, radialen Kontaktschulter 16b mit der gegenüberliegenden Fläche des Teils 52 reibschlüssig oder formschlüssig in Eingriff gelangt, so daß beim Festziehen der Montageschraube 16 das Teil 52 mitgedreht wird, bis der radiale Ansatz 56 am Anschlag 54b anstößt. Zur Verbesserung des Kraftschlusses zwischen Montageschraube 16 und dem Teil 52 können die einander zugewandten Flächen dieser Elemente mit einer Formschlußgestaltung versehen werden, die in der zeichnerischen Darstellung der Fig. 3 und 4 durch eine Rändelung angedeutet ist. Bei der in Fig. 3 gleichfalls und im Schnitt gezeigten Variante der Montageschraube 16 ist diese an der Unterseite ihrer Schulter 16b mit einer Ringnut zur Aufnahme eines O-Ringes 17 versehen, der den Mitnahmeeffekt gegenüber dem Teil 52 durch Reibung unterstützt.

Das plattenförmige Lagergehäuse 50 ist auf seiner von der Montageplatte 56 abgewandten Seite mit einer Öffnung 62 für den Durchgang des Schraubenkopfes 16a und seiner verbreiterten Kontaktschulter 16b versehen. Bei der Montage des Fahrzeugsitzes 10 wird die Steuereinrichtung 22 einer geeigneten Montageschraube 16 in ähnlicher Weise wie eine Unterlegscheibe zugeordnet. Sie kann als lose Einheit ausgebildet oder aber einer bestimmten Montagestelle fest zugeordnet werden, indem die Grundplatte 56 an einer geeigneten Stelle der Sitzverankerung befestigt wird oder unmittelbar durch einen Teil der Sitzverankerung gebildet wird. Im letztgenannten Falle wird das Lagergehäuse 50, wie in Fig. 1 gezeigt, unmittelbar an der Sitzverankerung befestigt, die dann die Montageplatte 56 bildet.

Bei der in Fig. 5 gezeigten Ausführungsform ist das in das Lagergehäuse 50 eingeführte Ende des Zugseiles 24b mit einem aufgepreßten Endstück 63 versehen, das zylindrisch oder würfelförmig sein kann. Dieses Endstück 63 greift in eine entsprechend geformte Aussparung am Umfang des ringscheibenförmigen drehbaren Teils 52 an. In seiner Wirkung ist dieses Endstück 63 mit dem radialen Ansatz 56 der in Fig. 4 gezeigten Ausführungsform vergleichbar. Es wird durch die Innenwandung des Lagerraumes 54 in Eingriff mit der Aussparung am Außenumfang des Sperrelementes 52 gehalten.

Wie in den Fig. 4 und 5 gezeigt, beträgt der Drehwinkel zwischen den Anschlägen 54a und 54b etwas mehr als 90°. Je nach Anwendung und konstruktiver Ausgestaltung kann dieser Drehwinkel größer oder kleiner sein.

Bei der in Fig. 2 gezeigten Ausführungsform ist der mechanische Sensor 26 mit einer verschwenkbaren Trägheitsmasse 30 ausgestattet. Es sind auch Ausführungen mit einer translationsverschiebbaren Trägheitsmasse möglich. Auf Einzelheiten des mechanischen Sensors wird hier nicht eingegangen, da sein Aufbau und seine Wirkungsweise von der Funktion der Steuereinrichtung 22 unabhängig sind. Auch kann anstelle des Stiftes 42 ein andersartiges Sperrelement Verwendung finden, solange dieses eine Sicherung der Trägheitsmasse des fahrzeugsensitiven Sensors bewirkt.

Weiterhin ist ohne weiteres ersichtlich, daß der Ansteuermechanismus ebensogut der in Fig. 1 gezeigten Rückstrammeinrichtung 18 wie einem Gassack-Rückhaltesystem zugeordnet werden kann.

Durch die Verwendung des erfindungsggemäßen Ansteuermechanismus wird gewährleistet, daß eine Aktivierung der Rückstrammeinrichtung 18 oder eines (nicht gezeigten) Gassack-Rückhaltesystems erst dann möglich ist, wenn ein Montagevorgang erfolgt ist, bei welchem eine Montageschraube 16 durch die Öffnung 62 des Lagergehäuses 50 hindurch sowie durch die Mittelbohrung des ringscheibenförmigen Teils 52 eingesetzt und festgezogen ist, wobei dieses Teil 52 bis zur Begrenzung am Anschlag 54b mitgedreht wird. Durch diesen Vorgang wird die fahrzeugsensitive Trägheitsmasse 30 des Sensors 26 entsichert. Bei einem Ausbau des Fahrzeugsitzes, beispielsweise zu Reparaturzwecken, wird die betreffende Montageschraube 16 gelöst, so daß auch das ringscheibenförmige Teil 52 frei wird und unter der Wirkung der Feder 44 der Stift 42 wieder in seine Sperrstellung bewegt werden kann. Der Sicherungszustand wird also selbsttätig durch Lösen der Montageschraube 16 wiederhergestellt.

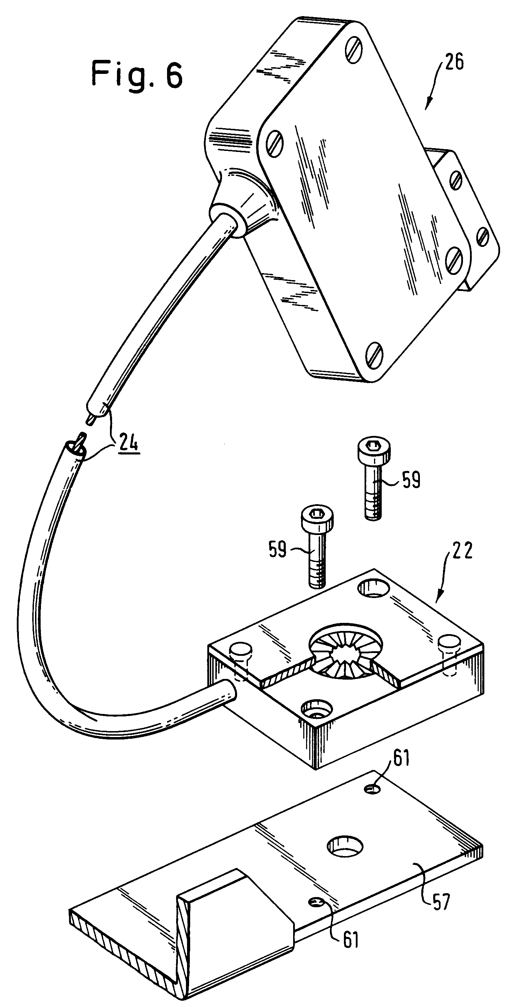

Bei der in Fig. 6 gezeigten Ausführungsform bildet die Steuereinrichtung 22 eine separate Einheit, die an irgendeiner passenden Stelle einer Montageschraube 16 zugeordnet werden kann. Sie wird mittels zweier Befestigungsschrauben 59 an der Oberseite eines Teiles 57 befestigt, das mittels der Montageschraube 16 am Fahrzeugboden verankert wird und zwei passend angeordnete Gewindebohrungen für die Befestigungsschrauben 59 aufweist.

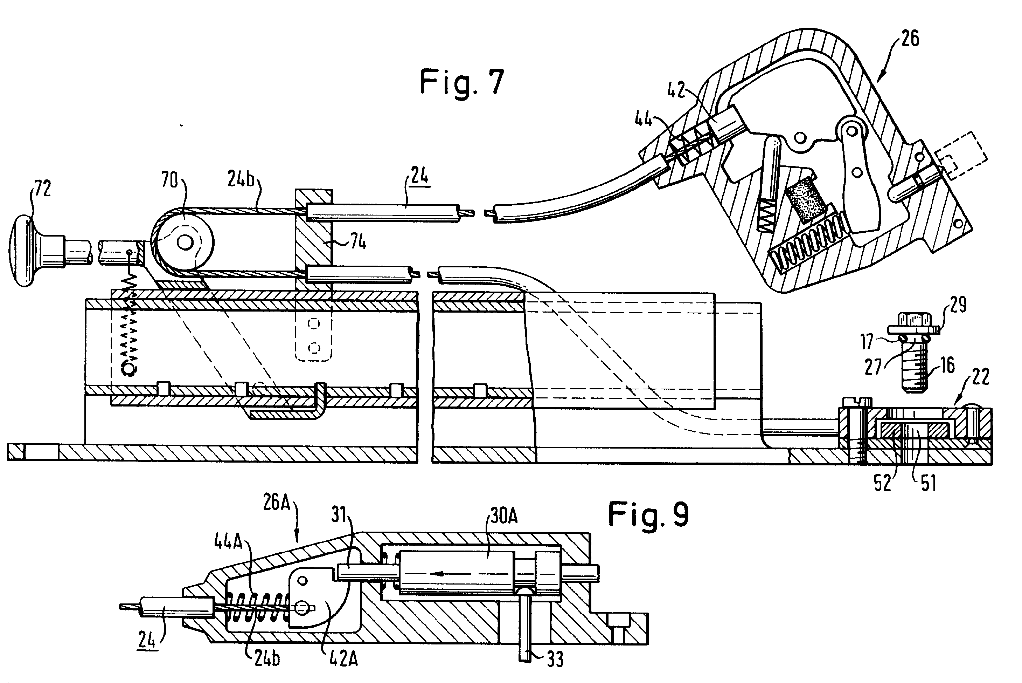

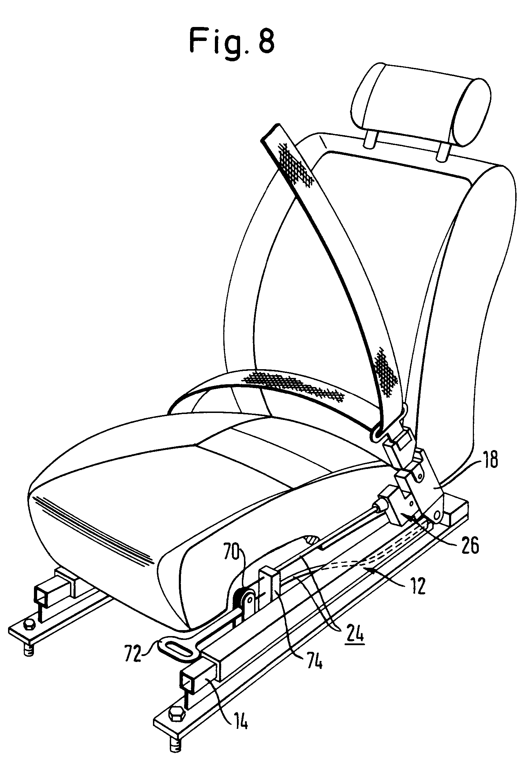

Bei der in Fig. 7 gezeigten Ausführungsform ist das Zugseil 24b des Seilzuges 24 über eine Umlenkrolle 70 geführt, die an einer Handhabe 72 zur Lösung der Sitzentriegelung eines Fahrzeugsitzes drehbar gelagert ist. Der Fahrzeugsitz mit integrierter Rückstrammeinrichtung 18 und Handhabe 72 zur Betätigung der Sitzentriegelung ist in Fig. 8 schematisch und in Perspektive dargestellt. Damit das Zugseil 24 über die Umlenkrolle 70 laufen kann, ist der Außenmantel des Seilzuge 24 unterbrochen. Die betreffenden Enden des Außenmantels des Seilzugs 24 sind in einer Strebe 74 abgestützt, die am Sitzrahmen 12 befestigt ist. Die Steuereinrichtung 22 ist prinzipiell in gleicher Weise aufgebaut wie bei den zuvor beschriebenen Ausführungsformen.

Fig. 7 zeigt die Anordnung im Zustand vor dem Einsetzen und Festziehen der Montageschraube 16. In diesem Zustand ist das Zugseil 24b entspannt, so daß der Stift 42 des Sensors 26 durch die Druckfeder 44 in der Sperrstellung gehalten wird. Beim Einsetzen und Festziehen der Montageschraube 26 wird das verdrehbare, ringscheibenförmige Teil 52 im Uhrzeigersinn verdreht, wodurch das Zugseil 24b gespannt und der Stift 42 entgegen der Kraft der Feder 44 in die Freigabestellung bewegt wird. Wenn nun aber die Handhabe 72 betätigt wird, um die Sitzverriegelung zu lösen, wird die Umlenkrolle 70 im Sinne einer Entspannung des Zugseils 24b, d.h. zur Strebe 74 hin, verlagert, so daß das Zugseil 24b entspannt wird. Die Druckfeder 44 drückt daher den Stift 42 in die Sicherungsstellung. Bei jeder Lösung der Sitzverrastung erfolgt daher selbsttätig eine Sicherung des Sensors 26, so daß etwaige, bei einer Sitzverstellung auftretende Stöße keine Aktivierung der Rückstrammeinrichtung zur Folge haben können.

Fig. 7 läßt eine Besonderheit der Montageschraube 16 erkennen: Sie ist mit einer radialen Ringnut 27 in ihrem Schaft neben ihrem Bund 29 versehen, und in dieser Ringnut 27 ist ein O-Ring 17 aufgenommen. Die Durchgangsbohrung 51 des Teils 52 für die Montageschraube 26 ist in ihrem Durchmesser so bemessen, daß der O-Ring 17 axial in sie hineingedrückt werden kann, um einen Reibungsschluß zwischen dem Teil 52 und der Montageschraube 26 herzustellen, ohne das Aufliegen der Unterseite des Bundes 29 auf der Oberseite des Teils 52 zu verhindern.

Eine weitere Ausgestaltung besteht darin, daß der Montageschraube 16 Mittel zugeordnet sind, die eine ungewollte Lockerung verhindern. Eine Lockerung der Montageschraube 16 könnte nämlich zur Folge haben, daß der Stift 42 unter der Wirkung der Druckfeder 44 in seine Sperrstellung gelangt.

Die Fig. 9 zeigt eine mögliche Ausführungsform eines fahrzeugsensitiven Sensors 26A, dessen Trägheitsmasse 30A nicht schwenkbar, sondern translationsverschiebbar gelagert ist. Bei der in Fig. 9 gezeigten gesicherten Stellung wird die Translationsverschiebung der Trägheitsmasse 30A in Fahrtrichtung (Pfeil) durch eine Sperrplatte 42A verhindert, die segmentförmig ausgebildet und mit einer stufenförmigen Ausnehmung versehen ist, in die das Ende eines koaxial an die Trägheitsmasse 30A angesetzten Lagerstiftes 31 eingreift. Das Zugseil 24b des Seilzuges 24 greift mit geeignetem Hebelarm an der Sperrplatte 42A an. Durch eine Druckfeder 44A ist die Sperrplatte 42A in ihre Sperrstellung vorbelastet. Die Sperrplatte 42A wird bei Zugausübung mittels des Seilzugs entgegen der Wirkung der Druckfeder 44A im Uhrzeigersinn in ihre Freigabestellung verschwenkt, in welcher sie den Weg für eine Verlagerung der Trägheitsmasse 30A in Fahrtrichtung (Pfeil in Fig. 9) freigibt. Diese Verlagerungsbewegung der Trägheitsmasse 30A wird über einen nur teilweise und schematisch gezeigten Stift 33 auf einen Mechanismus zur Aktivierung eines Rückstrammers übertragen.

## Patentansprüche

1. Ansteuermechanismus für Rückstrammeinrichtungen (18) eines Sicherheitsgurt-Rückhaltesystems oder für Gassack-Rückhaltesysteme in Fahrzeugen, mit in einem Gehäuse (28) angeordneten Funktionsteilen, die eine Sperreinrichtung (42, 44) zur Sperrung der Ansteuerfunktion umfassen, wobei diese Sperreinrichtung (42, 44) zwischen einem Sperrzustand und einem Freigabezustand umsteuerbar ist und zur Umsteuerung der Sperreinrichtung zwischen ihren zwei Zuständen ein Sperrelement (42) bewegt wird, dadurch gekennzeichnet, daß das Sperrelement (42) an ein verdrehbar gelagertes Teil (52) angeschlossen ist, das durch eine Montageschraube (16) bei deren Festziehen mitdrehbar ist und dessen so erzeugte Drehbewegung eine Verschiebung des Sperrelements (42) im Sinne einer Umsteuerung der Sperreinrichtung in den Freigabezustand bewirkt.

2. Ansteuermechanismus nach Anspruch 1, dadurch gekennzeichnet, daß das Sperrelement (42) durch Federkraft (44) in seine Sperrstellung vorgespannt ist.

3. Ansteuermechanismus nach Anspruch 2, dadurch gekennzeichnet, daß das Sperrelement (42) bei Lösung der Montageschraube (16) aufgrund der Vorspannung selbsttätig in seine Sperrstellung zurückkehrt.

4. Ansteuermechanismus nach einem der vorstehenden Ansprüche, dadurch gekennzeichnet, daß das Sperrelement (42) und das verdrehbar gelagerte Teil (52) durch einen Seilzug (24) miteinander verbunden sind.

5. Ansteuermechanismus nach einem der vorstehenden Ansprüche, dadurch gekennzeichnet, daß das verdrehbar gelagerte Teil (52) als den Schaft der Montageschraube (16) umgebende Ringscheibe ausgebildet ist.

6. Ansteuermechanismus nach Anspruch 5, dadurch gekennzeichnet, daß die Ringscheibe (52) durch Reibungs- oder Formschluß zwischen ihrer dem Kopf (16a, 16b) der Montageschraube (16) zugewandten Fläche und der gegenüberliegenden Fläche dieses Schraubenkopfes mit der Montageschraube (16) drehschlüssig koppelbar ist.

7. Ansteuermechanismus nach einem der vorstehenden Ansprüche, dadurch gekennzeichnet, daß das verdrehbar gelagerte Teil (52) zwischen zwei Anschlägen (54a, 54b) begrenzt verdrehbar ist.

8. Ansteuermechanismus nach Anspruch 7, dadurch gekennzeichnet, daß das verdrehbar gelagerte Teil (52) vor seiner Verdrehung durch die Montageschraube (16) eine Zwischenstellung zwischen den zwei Anschlägen (54a, 54b) einnimmt.

9. Ansteuermechanismus nach einem der Ansprüche 4 bis 8, dadurch gekennzeichnet, daß ein Ende des Zugseils (24b) des Seilzuges (24) am Umfang des verdrehbar gelagerten Teils (52) angreift.

10. Ansteuermechanismus nach Anspruch 9, dadurch gekennzeichnet, daß das Ende des Zugseils (24b) des Seilzuges (24) in einer tangentialen Bohrung eines radialen Ansatzes (56) des verdrehbar gelagerten Teils (52) verpreßt ist.

11. Ansteuermechanismus nach Anspruch 9, dadurch gekennzeichnet, daß das Ende des Zugseils (24b) des Seilzuges (24) mit einem aufgepreßten Endstück (63) versehen ist, das in eine Aussparung am Umfang des verdrehbar gelagerten Teils (52) eingreift.

12. Ansteuermechanismus nach einem der vorstehenden Ansprüche, dadurch gekennzeichnet, daß das verdrehbar gelagerte Teil (52) mit Spiel in einem Lagergehäuse (50) aufgenommen ist, das eine Öffnung (62) für den Durchtritt des Kopfes (16a, 16b) der Montageschraube (16) aufweist.

13. Ansteuermechanismus nach Anspruch 12, dadurch gekennzeichnet, daß das Lagergehäuse (50) durch eine Platte gebildet ist, aus deren einer Hauptseite ein Lagerraum (54) für das verdrehbar gelagerte Teil (52) ausgespart ist.

14. Ansteuermechanismus nach einem der vorstehenden Ansprüche, dadurch gekennzeichnet, daß das Sperrelement ein axial verschiebbarer Stift (42) ist, der im Sperrzustand mit seinem inneren Ende an einer fahrzeugsensitiven Masse (30) angreift.

15. Ansteuermechanismus nach einem der vorstehenden Ansprüche, für eine in einen Fahrzeugsitz (80) integrierte Rückstrammeinrichtung (18), dadurch gekennzeichnet, daß der Lösehub der Handhabe (72) zur Sitzentriegelung auf das Sperrelement (42) im Sinne einer Umsteuerung in den Sperrzustand übertragbar ist.

16. Ansteuermechanismus nach Anspruch 15 und einem der Ansprüche 4 bis 14, dadurch gekennzeichnet, daß das Zugseil (24b) des Seilzuges (24) über ein Umlenkelement geführt ist, das an der Handhabe gelagert ist, und daß die Umlenkung des Zugseiles (24b) in solchem Sinne erfolgt, daß durch den Lösehub der Handhabe (82) das Zugseil (24b) entspannt wird.

17. Ansteuermechanismus nach einem der vorstehenden Ansprüche, dadurch gekennzeichnet, daß die Montageschraube (16) mit einer Ringnut versehen ist, in der ein O-Ring (17) zur Herstellung eines Reibungsschlusses zwischen der Montageschraube (16) und dem verdrehbar gelagerten Teil (52) herstellbar ist.

18. Ansteuermechanismus nach Anspruch 17, dadurch gekennzeichnet, daß die Ringnut radial aus dem Schaft der Montageschraube ausgespart ist und der O-Ring axial in die Durchgangsbohrung des verdrehbar gelagerten Teils (52) für die Montageschraube (16) eindrückbar ist.

## Claims

1. Drive mechanism for tightening means (18) of a safety belt restraining system or for gas bag restraining systems in vehicles comprising functional components which are arranged in a housing (28) and which include a blocking means (42, 44) for blocking the drive function, said blocking means (42, 44) being switchable between a blocking state and a release state and a blocking element (42) being moved for switching the blocking means between its two states, characterized in that the blocking element (42) is connected to a rotatably mounted component (52) which is rotatably driven by a mounting screw (16) and jointly rotated with said screw on tightening thereof and the rotary movement of said component thus generated effects a displacement of the blocking element (42) in the sense of switching the blocking means to the release state.

2. Drive mechanism according to claim 1, characterized in that the blocking element (42) is biased by spring force (44) into its blocking position.

3. Drive mechanism according to claim 2, characterized in that on loosening the mounting screw (16) due to the biasing the blocking element (42) returns automatically to its blocking position.

4. Drive mechanism according to any one of the preceding claims, characterized in that the blocking element (42) and the rotatably mounted component (52) are connected together by a sheathed cable (24).

5. Drive mechanism according to any one of the preceding claims, characterized in that the rotatably mounted component (52) is formed as annular disc or washer surrounding the shank of the mounting screw (16).

6. Drive mechanism according to claim 5, characterized in that the annular disc (52) is adapted to be coupled in rotation to the mounting screw (16) by frictional or form-locking engagement between its surface facing the head (16a, 16b) of the mounting screw (16) and the opposite surface of said screw head.

7. Drive mechanism according to any one of the preceding claims, characterized in that the rotatably mounted component (52) is rotatable to an extent limited by two stops (54a, 54b).

8. Drive mechanism according to claim 7, characterized in that the rotatably mounted component (52) prior to its rotation by the mounting screw (16) assumes an intermediate position between the two stops (54a, 54b).

9. Drive mechanism according to any one of claims 4 to 8, characterized in that one end of the pulling cable (24b) of the sheathed cable (24) engages the periphery of the rotatably mounted component (52).

10. Drive mechanism according to claim 9, characterized in that the end of the pulling cable (24b) of the sheathed cable (24) is pressed in a tangential bore of a radial lug (56) of the rotatably mounted component (52).

11. Drive mechanism according to claim 9, characterized in that the end of the pulling cable (24b) of the sheathed cable (24) is provided with a pressed-on end piece (63) which engages into a cutout at the periphery of the rotatably mounted component (52).

12. Drive mechanism according to any one of the preceding claims, characterized in that the rotatably mounted component (52) is received with clearance in a bearing housing (50) which comprises an opening (62) for the passage of the head (16a, 16b) of the mounting screw (16).

13. Drive mechanism according to claim 12, characterized in that the bearing housing (50) is formed by a plate from the one major side of which a bearing space (54) for the rotatably mounted component (52) is cut.

14. Drive mechanism according to any one of the preceding claims, characterized in that the blocking element is an axially displaceable pin (42) which in the blocking state engages with its inner end on a vehicle-sensitive mass (30).

15. Drive mechanism according to any one of the preceding claims for a tightening means (18) integrated into a vehicle seat (80), characterized in that the release travel of the hand grip (72) for unlocking the seat can be transferred to the blocking element (42) in the sense of switching to the blocking state.

16. Drive mechanism according to claim 15 and any one of claims 4 to 14, characterized in that the pulling cable (24b) of the sheathed cable (24) is led via a deflection element which is mounted on the hand grip and that the deflection of the pulling cable (24b) takes place in a direction such that by the release travel of the hand grip (82) the pulling cable (24b) is relaxed.

17. Drive mechanism according to any one of the preceding claims, characterized in that the mounting screw (16) is provided with an annular groove into which an O ring (17) is insertable for establishing a frictional connection between the mounting screw (16) and the rotatably mounted component (52).

18. Drive mechanism according to claim 17, characterized in that the annular groove is cut radially out of the shank of the mounting screw and the O ring is adapted to be pressed axially into the through bore of the rotatably mounted component (52) for the mounting screw (16).

## Revendications

1. Mécanisme de commande de dispositifs de rétraction (18) d'un système de retenue de ceinture de sécurité ou de commande de systèmes de retenue de poche de gaz pour véhicules, comprenant des éléments fonctionnels disposés dans un boîtier (28) et comportant un dispositif (42, 44) de blocage de la fonction de commande, ce dispositif de blocage (42, 44) pouvant subir une inversion entre un état de blocage et un état de libération et un élément de blocage (42) étant déplacé pour l'inversion du dispositif de blocage entre ses deux états, caractérisé en ce que l'élément de blocage (42) est relié à une pièce (52) montée rotative, pouvant être entraînée en rotation par une vis de montage (16) lors du serrage de cette dernière et dont le mouvement de rotation ainsi produit provoque un déplacement de l'élément de blocage (42) dans le sens d'une inversion du dispositif de blocage à l'état de libération.

2. Mécanisme de commande selon la revendication 1, caractérisé en ce que la force d'un ressort (44) maintient l'élément de blocage (42) sous précontrainte à sa position de blocage.

3. Mécanisme de commande selon la revendication 2, caractérisé en ce que le desserrage de la vis de montage (16) a pour effet que la précontrainte que subit l'élément de blocage (42) le fait revenir automatiquement à sa position de blocage.

4. Mécanisme de commande selon l'une des revendications précédentes, caractérisé en ce qu'une transmission (24) à câble relie l'élément de blocage (42) et la pièce (52) montée rotative.

5. Mécanisme de commande selon l'une des revendications précédentes, caractérisé en ce que la pièce (52) montée rotative est conformée en disque annulaire entourant la tige de la vis de montage (16).

6. Mécanisme de commande selon la revendication 5, caractérisé en ce que le disque annulaire (52) est solidarisable en rotation avec la vis de montage (16) par assujettissement par friction ou par complémentarité de formes entre sa surface tournée vers la tête (16a, 16b) de la vis de montage (16) et la surface opposée de cette tête.

7. Mécanisme de commande selon l'une des revendications précédentes, caractérisé en ce que la rotation de la pièce (52) montée rotative est limitée entre deux butées (54a, 54b).

8. Mécanisme de commande selon la revendication 7, caractérisé en ce que la pièce (52) montée rotative occupe une position intermédiaire entre les deux butées (54a, 54b) avant que la vis de montage (16) la fasse tourner.

9. Mécanisme de commande selon l'une des revendications 4 à 8, caractérisé en ce qu'une extrémité du câble (24b) de la transmission (24) attaque la circonférence de la pièce (52) montée rotative.

10. Mécanisme de commande selon la revendication 9, caractérisé en ce que l'extrémité du câble (24b) de la transmission (24) est comprimée dans un trou tangentiel d'un talon radial (56) de la pièce (52) montée rotative.

11. Mécanisme de commande selon la revendication 9, caractérisé en ce que l'extrémité du câble (24b) de la transmission (24) est munie d'une pièce d'extrémité (63) comprimée sur elle et pénétrant dans un évidement de la circonférence de la pièce (52) montée rotative.

12. Mécanisme de commande selon l'une des revendications précédentes, caractérisé en ce que la pièce (52) montée rotative est logée avec jeu dans un boîtier de support (50) qui comporte un trou (62) pour le passage de la tête (16a, 16b) de la vis de montage (16).

13. Mécanisme de commande selon la revendication 12, caractérisé en ce que le boîtier de montage (50) est formé d'une plaque sur le côté principal de laquelle est ménagé un évidement formant une chambre (54) de montage de la pièce (52) montée rotative.

14. Mécanisme de commande selon l'une des revendications précédentes, caractérisé en ce que l'élément de blocage est une broche (42) qui est déplaçable axialement et qui, à l'état de blocage, attaque par son extrémité interne une masse (30) répondant au véhicule.

15. Mécanisme de commande selon l'une des revendications précédentes, destiné à un dispositif de rétraction (18) intégré dans un siège (80) de véhicule, caractérisé en ce que la course de dégagement de la manette (72) de déverrouillage du siège est transmissible à l'élément de blocage (42) dans le sens de son inversion à l'état de blocage.

16. Mécanisme de commande selon la revendication 15 et l'une des revendications 4 à 14, caractérisé en ce que le câble (24b) de la transmission correspondante (24) est guidé sur un élément de renvoi monté sur la manette et en ce que le renvoi du câble (24b) s'effectue dans un sens tel que la course de dégagement de la manette (82) détend le câble (24b).

17. Mécanisme de commande selon l'une des revendications précédentes, caractérisé en ce que la vis de montage (16) comporte une gorge annulaire dans laquelle un joint torique (17) est destiné à l'établissement d'un assujettissement à friction entre la vis de montage (16) et la pièce (52) montée rotative.

18. Mécanisme de commande selon la revendication 17, caractérisé en ce que la gorge annulaire est formée d'un évidement radial de la tige de la vis de montage et le joint torique peut s'enfoncer axialement dans le trou de traversée de la pièce (52) montée rotative qui est destiné à la vis de montage (16).
